# EUROPEAN PATENT SPECIFICATION

(11) **EP 0 576 457 B1**
(45) Date of publication and mention of the grant of the patent: **10.04.1996**
(21) Application number: 92905896.4
(22) Date of filing: 14.02.1992
(51) Int. Cl.: H02B 1/56

(54) **DISTRIBUTION OF COOLING AIR IN SWITCHGEAR CUBICLES**
VERTEILUNG VON KÜHLLUFT IN SCHALTSCHRÄNKEN
DISTRIBUTION D'AIR DE REFROIDISSEMENT DANS LES ARMOIRES D'APPAREILLAGES ELECTRIQUES

(30) Priority: 18.03.1991 SE 9100806
(43) Date of publication of application: 05.01.1994
(73) Proprietor: ASEA BROWN BOVERI AB, S-721 83 Västeras (SE)
(72) Inventor: ERIKSSON, Stig, S-723 48 Västeras (SE); MOGREN, Lars-Ove, S-722 16 Västeras (SE); MORITZ, Bertil, S-722 28 Västeras (SE)
(74) Representative: Boecker, Joachim, Dr.-Ing.
(86) International application number: SE9200089
(87) International publication number: WO9216986

(56) References cited:
- US-A- 3 230 293
- US-A- 4 378 461
- PATENT ABSTRACTS OF JAPAN, vol. 10, no. 117 (E-400) ; & JP-A-60 251 609

## Description

### TECHNICAL FIELD

The present invention relates to a method and a device for distributing air in electric apparatus cubicles, such as, for example, in switchgear and corresponding plants. The method of distributing the air in cubicles entails an adaptation to the local cooling requirement of the equipment located in the cubicles.

### BACKGROUND ART

Electric and electronic equipment utilized in industrial processes, switchgear and similar use is generally enclosed in a casing of metal, usually some form of apparatus cubicles. The casing or the cubicle is utilized, inter alia, as a frame for internal installation of electric components but also as protective casing for the electric equipment with respect to the influence of dust, moisture, aggressive agents, etc., as well as semiprotection for reasons of personal safety. In connection with this enclosure, the problem arises regarding the removal of heat emitted by the components present in the cubicles by the power developed in these components.

Thermal dissipation may be arranged in many ways, for example by radiation from the walls of the cubicles themselves, aeration of the cubicles by self-convection with the aid of ventilating openings, aeration with the aid of fans and filters, forced aeration by way of heat exchangers and conditioning by means of refrigerating machines.

If cooling is performed by ambient air, treatment of the air in the form of, for example, cleaning or drying may be necesesary in those cases when the cubicles are located in a fouled or moist environment. Such cleaning may comprise filtering of the air or the removal of corrosive gases from the ambient air before this is supplied, in cleaned form, to the interior of the cubicles for cooling of the components located there.

Known are a number of different part-solutions for cleaning or treating air in the above-mentioned manner in individual apparatus cubicles for the purpose of removing excess heat from the cubicles. Such single-cubicle solutions are described, inter alia, in the patent documents EP,A3,57 411, FR,A1,2 568 712 and JP 58-241 936.

In switchgear or other types of industrial plants where the electric equipment is extensive, it may be required that a number of cubicles assembled into a series of cubicles are arranged. A cubicle series of this kind is generally designed as a series of cubicles arranged in one or more rows with the individual cubicles placed side-by-side close to each other. Upon removal of heat from electric equipment in a cubicle series of the above-mentioned kind, single-cubicle solutions according to the above are not applicable. Providing each individual cubicle with its own air treatment unit cannot be justified from an economical point of view. Instead it is common to use an air treatment plant, also called conditioning plant, to cool, moisten, dry or clean the air in the entire room where the cubicles in a series of cubicles are stored. With this method it is possible to achieve the desired cooling or cleaning of air to the electric equipment in the cubicles. The method can also be supplemented with fans in the individual cubicles to prevent the formation of stationary hot air zones inside the cubicles.

Treating all the air in a room to attain the desired effect with respect to, for example, the cooling requirement is no good solution. The air volume that has to be treated is large, which means that the air treatment plant must be dimensioned for an air volume which is many times larger than the air volume which really passes the apparatus cubicles for cooling. This renders the air treatment plant more expensive than necessary. Another difficulty is that the room climate must be adapted to human needs, since personnel may be present in the rooms mentioned. In this way it is not possible to optimize, for example, air temperature or air composition according to the primary requirements of the electric equipment. Treated air supplied to the room where the apparatus cubicles are erected is normally varied within an interval of a couple of degrees above or below room temperature.

It is known that as large a percentage as 60-70% of normal operating environments for electric and electronic equipment in certain industries as, for example, paper and pulp industries, are so corrosive that they have a marked influence on the reliability of service and the service life of the equipment. Currently, therefore, this problem is often solved by air treatment comprising chemical filtering of the air in the whole of the room where the electric equipment in question is located, which entails treatment of a disproportionately large air volume.

It is also known that the service life of certain components of semiconductor type is greatly temperature-dependent. For these components, as low a temperature as possible in the immediate surroundings of the component is therefore aimed at. For electric equipment such as apparatus and electric busbars, the allowed working temperature is normally maximized in dependence on the temperature durability of the conductors and/or the insulating materials. The working temperature is dependent on both the immediate ambient temperature and the self-heating of the apparatus during normal loading. An increase of the temperature also provides an increase of the resistance of electric conductors in the equipment, which results in increased power output and a further increase of the temperature.

Swedish patent application No. 9100599-1 describes a method of treating the air in a series of adjacently located electrical apparatus cubicles, which are closed in relation to the surrounding air, by means of an air treatment unit common to the cubicles in order to reduce the air quantity treated. The method for air treatment comprises passing cleaned and cooled, possibly also hydrated or dried air, from an air treatment unit via a common channel and further via parallel branch pipes with pressure regulating devices for regulating the air flow, directly to each individual apparatus cubicle, these apparatus cubicles being adapted to receive the treated air, distribute the air for cooling purposes over electric equipment present in the cubicles, the distributed air being adapted to be collected and returned, via connections arranged between the cubicles, to the air treatment unit where an extra intake for ambient air is adapted to supply extra air to the air treatment system in order to create an overpressure in the system while at the same time replacing an air loss caused by a leakage flow of air out of the cubicle series. The direction of the air current through the system may be changed.

In all cooling of electric equipment according to the above, it is desirable that the cooling air be primarily directed towards regions or components where the cooling requirement is greatest or gives the best effect. As an example, it can be mentioned that in switchgear cubicles where the electricity supply of the cubicles is arranged by means of multiphase lanes (or paths) of busbars in the form of copper busbars, extending through the cubicles, the greatest heat generation takes place in the mentioned lanes of busbars. This problem can be avoided by a reduction of the allowed currents through the electric busbars or by increasing the flow areas of the busbars, which in turn entails increased material consumption and increased costs. Consequently, it would be desirable to guide the cooling air passed into the cubicles in a more efficient way, making it possible to increase the rated currents for cubicles or apparatus in cubicles while maintaining the amount of cooling.

Swedish patent 449 150 describes semiprotection for electric busbar lanes internally in electric switchgear cubicles. This patent specification illustrates grooves or boxes which surround both horizontal and vertical busbar lanes, the grooves also constituting protection against unintentional contact. By their shape, these protective grooves form channels which, in a series of cubicles, are naturally interconnected to form a coherent system of interconnected channels extending through the entire cubicle series, these channels surrounding the busbar lanes located in the respective cubicles. The invention disclosed in this description shows a method of utilizing the above-mentioned already existing channels to distribute cooling air to switchgear cubicles in a more efficient way.

### SUMMARY OF THE INVENTION

The present invention relates to a method as defined in claim 1 and an arrangement as defined in claim 5 for distribution of cooling air to switchgear cubicles. The invention comprises distributing cooling air or other cooled gas, in a series of closely positioned switchgear cubicles which are closed to the surrounding air, in the cubicles along the same path as that along which the current through and into the cubicles is distributed. This is achieved by distributing air or gas to the respective cubicles in the cubicle series via channels in the form of protective grooves or busbar boxes which constitute semiprotection for those single-phase or multi-phase electric busbar lanes which distribute current to the cubicles and to electric equipment present in the cubicles. The direction of the cooling gas distribution is the same as the current direction or the reverse.

By a solution of the cooling problem according to the invention, cooling gas is forced to primarily traverse the channels which surround the busbar lanes, thus cooling these efficiently, whereupon the cooling gas, through outlets or openings in the channels, is adapted to effect a flow of cooling air over other equipment in the cubicles which may need cooling.

Cooling gas is supplied to a series of cubicles from at least one air treatment unit to a common channel for the cubicles which surrounds the current-distributing electric busbar lanes common to all the cubicles in the series. This channel extends through all the cubicles in the series of cubicles. From this common channel, the cooling gas is distributed further out into each separate cubicle via branch channels connected to the common channel. These branch channels wholly or partially surround current-distributing electric busbar lanes branched off into each separate cublicle.

At the connection of the branch channels to the common channel, adjustable valves are arranged, the opening area of which may be varied such that a balanced air flow can be obtained between the different cubicles in dependence on the cooling requirement of each individual cubicle.

The cubicles according to the invention are adapted to closed air treatment. In addition, the cubicles are designed such that a channel for return gas is formed in cooperation between the cubicles by providing adjacently located cubicles with openings at the bottom of a common cubicle wall.

The direction of the flow of cooling gas distributed to a series of cubicles and the corresponding direction of the flow of return gas can be reversed if desired.

An additional advantage of the cooling air distribution according to the invention is that it is advantageous to realize the air treatment unit itself as a cubicle module with an exterior of a design similar to that of the cubicle modules in the series of switchgear cubicles. In this way, the cubicle containing the air treatment unit is provided with openings for the mentioned cooling gas and return gas flows in the same way as the switchgear cubicles described above.

### BRIEF DESCRIPTION OF THE DRAWINGS

Figure 1 shows an explanatory diagram of a series of switchgear cubicles with an attached cubicle for air treatment and at the same time illustrates the flow paths for cooling gas and electric current, respectively, in the series of cubicles.

Figure 2 shows an exploded view of two switchgear cubicles in a series of switchgear cubicles, illustrating a cooling gas flow via the channels formed by the protective grooves in the cubicles.

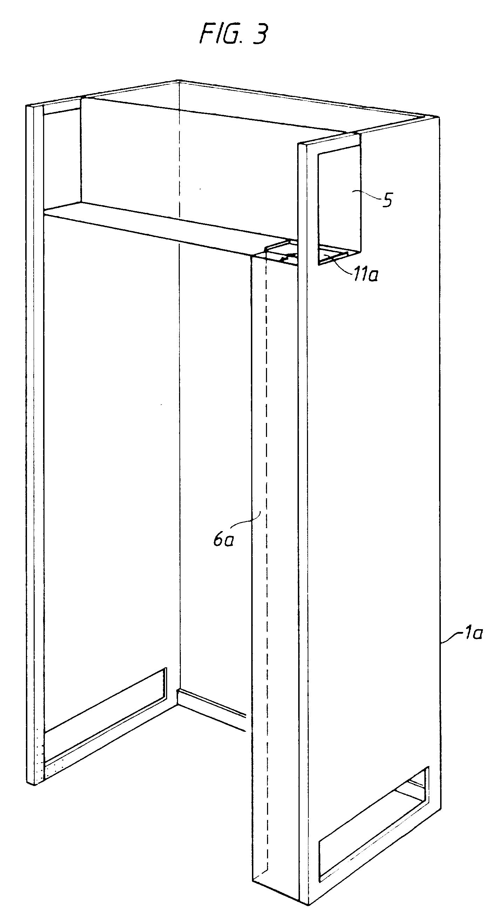

Figure 3 illustrates, in a view of the back of a cubicle with the rear wall removed, how the cooling gas channels are arranged in an individual cubicle.

### DESCRIPTION OF THE PREFERRED EMBODIMENTS

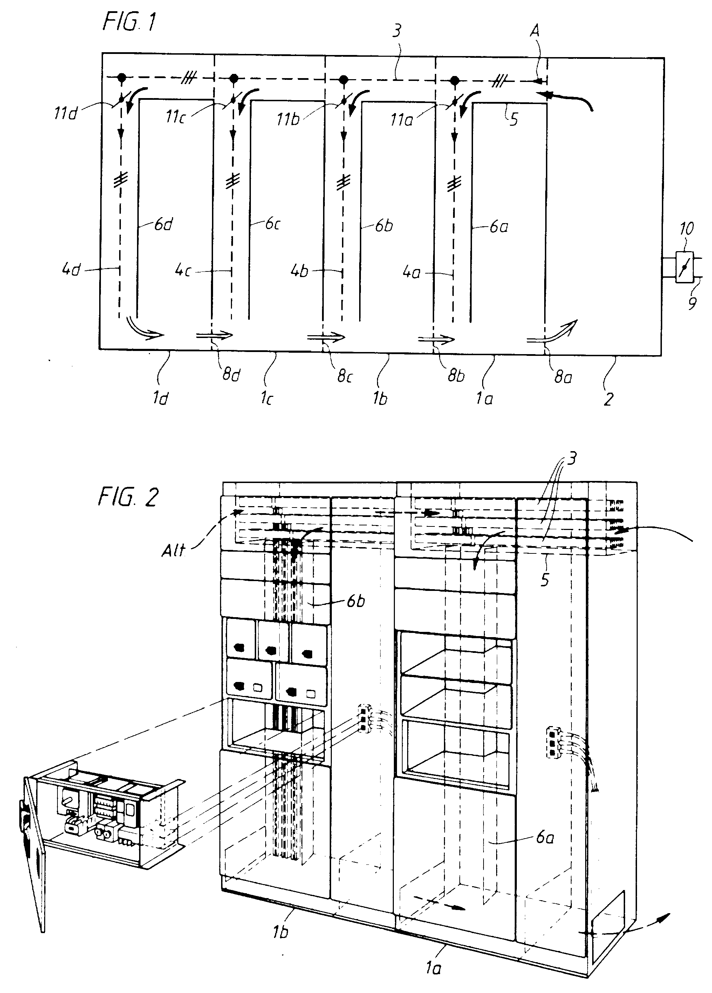

A preferred example of how the method according to the invention can be carried out will be described with reference to Figure 1.

A number of apparatus cubicles 1a-1d are arranged close to each other. These apparatus cubicles contain electric equipment which requires cooling. In this example, cooling is assumed to be performed by means of air. This is, of course, not necessary since other gas cr gas mixture may replace air as refrigerant. Cooling of the air is carried out by an air-conditioning unit 2, also called air treatment unit. In the figure the air treatment unit is housed in a cubicle with the same exterior as the apparatus cubicles 1a-1d, that is, as a cubicle module in the same series of cubicles. This is, of course, not necessary, since any optional air treatment unit may be connected to the cubicle series.

The electric current into the cubicle series is introduced at A in the example and is passed via horizontal busbar lanes 3 for distribution to the individual cubicles 1a-1d in the series. From the horizontal busbar lane 3 there extend vertical branches 4a-4d of busbars for distribution of current to the respectively individual cubicle for further distribution of current to electric equipment in the cubicles.

Around the horizontal and vertical busbars, protective channels - also called busbar boxes - 5, 6a-6d are arranged. The purpose of these busbar boxes is to serve as semi-protection against unintentional human contact with the current-carrying busbar lanes. The vertical busbar boxes are partially open inwards towards electric equipment in the cubicles separated by shelf planes. In the present invention the intention is also to utilize these busbar boxes to form a channel system for distribution of cooling air from an air-conditioning unit 2 via the mentioned channels for distribution to each individual cubicle so that the cooling air is conducted near the current-carrying and heat-emitting busbar lanes 3, 4a-4d before the cooling air is released for the purpose of cooling out into apparatus in the individual cubicles.

The boxes around the horizontal busbar lanes together form a continuous horizontal channel 5 for the cubicles in the series of cubicles. This horizontal channel 5 communicates with vertical channels 6a-6d located inside the respective cubicles connected to the series, which channels at the same time constitute those boxes around the vertical busbar lanes which serve as semiprotection for these vertical busbar lanes. Cooling air flowing through the horizontal channel 5 will thereby, secondarily, upon entering one of the vertical channels 6a-6d, cool the busbar lanes 4a-4d located in these channels.

In the vertical channels 6a-6d, cooling air flows in the gaps between the walls of the vertical busbar box which form the channels 6a-6d and the vertical busbar lanes 4a-4d. The busbar box is either fully open towards the separated shelf planes of the cubicles for electric equipment, or provided with openings or outlets for distribution of cooling air out from the channels to electric equipment for cooling purposes. Through the mentioned outlets, the cooling air is distributed out to electric equipment located close to the outlets. The outlets may be freely designed for obtaining the desired cooling effect locally in the respective electric equipment installed in the cubicles, all according to the need of cooling of this equipment.

Consumed cooling air is collected at the bottom of the cubicles and is passed via sluices 8a-8d, which constitute openings between adjoining cubicles, back to an air treatment unit 2 for renewed treatment.

The principle of the path of the cooling air through the series of cubicles is thus that the cooling air follows the same paths as those of the current when this branches off into the cubicle system.

In an alternative embodiment of the apparatus cubicles, a certain overpressure prevails since the air treatment system can be supplied with additional intake air from the surroundings via an intake 9 with a regulating device 10. This additional intake air is intended to replace a leakage air flow out from the cubicle series and at the same time serves as a guarantee that uncleaned or uncooled ambient air does not leak into the system. With the regulating device 10 the quantity of ambient air into the air treatment system can be regulated.

It is important that the air flow through each cubicle 1a-1d can be controlled and influenced to avoid that any cubicle in the series receives too small an air flow or that back flows occur. By a good balancing of the air pressure into each individual cubicle by means of an adjustable valve 11a-11d in the vertical channels 6a-6d, such a balancing may be attained.

Since all air treatment takes place in the air conditioning unit 2, it is possible to cover different types of desirable forms of treatment of the air, all according to the need. Thus, no limitation to cooling of return air from a series of cubicles is imposed. Drying, hydration, mechanical and/or chemical filtering or other chemical treatment of return air can be performed.

If desired, there is nothing preventing conducting the cooling air in the system in a direction which is the opposite to the one described above.

An embodiment with a series of cubicles comprising four apparatus cubicles has been described above. Also in this case, there is nothing preventing the invention from being applied to each series of cubicles comprising at least two apparatus cubicles 1a-1d. If considered desirable, more than one air treatment unit 2 may be arranged in the system. If the system of apparatus cubicles comprises more than one series of cubicles, cooling air and return air from another series of cubicles may be, respectively, passed to and collected in the series of cubicles which accomodates the air treatment unit via separate distribution channels between the different series of cubicles.

## Claims

1. A method of distributing cooling gas in a system of switchgear cubicles (1a-1d) comprising switchgear cubicles, arranged closely together, in at least one series of at least two cubicles and electric equipment in the cubicles in the system cooled by cooling gas from a common air conditioning unit (2), **characterized in that** the cooling gas in the series of cubicles and in each respective cubicle is distributed in and along the same channels (5, 6) as those in which current is distributed in the cubicle series and each respective cubicle (1a-1d).

2. A method of distributing cooling gas in switchgear cubicles according to claim 1, **characterized in that** the at least one series of cubicles extends horizontally and the cooling gas is distributed to the cubicles (1a-1d) in the series of cubicles via a common horizontal channel (5) located inside the cubicles and via vertical channels (6a-6d) disposed in the respective cubicles, said channels (5, 6a-6d) at the same time constituting protective channels for busbar lanes (3, 4a-4d) which distribute current to and in the cubicles.

3. A method of distributing cooling gas according to claim 2, **characterized in that** the gas which is supplied to the series of cubicles is treated according to at least one of the following treatment forms: cooling, mechanical filtering, chemical filtering, other chemical treatment, hydration and drying in the air conditioning unit (2).

4. A method of distributing cooling gas according to claim 3, **characterized in that** the gas in the cubicle system has a higher pressure than air surrounding the cubicles because the air conditioning unit is supplied with extra ambient air or other gas via an adjustable intake (9) to replace a leakage gas flow out of the cubicle series and to prevent ambient air from penetrating into the cubicle system.

5. An arrangement for carrying out the method according to claim 1 for distributing cooling air in a system of switchgear cubicles the arrangement comprising switchgear cubicles arranged closely together in at least one series of at least two cubicle and electric equipment in the cubicles in the system cooled by cooling gas from a common air conditioning unit (2),
**characterized in that**
the cubicle series (1a-1d) extends horizontally and comprises a horizontal channel (5) extending through all the cubicles and vertical channels (6a-6d) in the respective cubicles, said vertical channels being branched off from said horizontal channel (5),
said horizontal and vertical channels (5, 6a-6d) enclose horizontal and vertical busbar lanes (3, 4a-4d) which distribute current to the cubicles, and
the horizontal and vertical channels (5, 6a-6d) are adapted to receive cooling gas from said at least one air conditioning unit (2) and to distribute cooling gas to said electric equipment in the cubicles via openings or outlets.

6. An arrangement according to claim 5, **characterized in that** the switchgear cubicles in the series are insulated against the surrounding atmosphere by means of seals at gaps in the apparatus casing facing the surroundings.

7. An arrangement according to claim 5 in which the switchgear cubicles are provided with closures for the horizontal channels (5) and for sluices (8a-8d) constituted by openings in the cubicle casing, **characterized in that** when removing said closures when extending the cubicles into a series of cubicles, a distribution channel and a collection channel, respectively, for cooling gas are created, the channels being common to the series of cubicles, by cooperation between horizontal channels (5) located in the respective cubicles (5) and at the sluices (8a-8d), respectively.

8. An arrangement according to claim 5, **characterized in that** each vertical channel (6a-6d) is provided with valves (11a-11d) by which the gas flow to the respective cubicle can be regulated and individually distributed.

## Patentansprüche

1. Verfahren zur Verteilung von Kühlgas in einem System aus Schaltschränken (1a-1d), welche Schaltschränke dicht beieinander in mindestens einer Reihe von mindestens zwei Schränken angeordnet sind, wobei elektrische Ausrüstungen in den Schränken des Systems durch Kühlgas von einer gemeinsamen Luftklimatisierungseinheit (2) gekühlt werden, **dadurch gekennzeichnet,** daß das Kühlgas in der Reihe von Schränken und in jedem einzelnen Schrank über dieselben Kanäle (5, 6) verteilt wird, über die auch der Strom in der Schrankreihe und jedem einzelnen Schrank (1a-1d) verteilt wird.

2. Verfahren zur Verteilung von Kühlgas in Schaltschränken nach Anspruch 1, **dadurch gekennzeichnet**, daß die mindestens eine Reihe von Schränken sich horizontal erstreckt und das Kühlgas den Schränken (1a-1d) der Schrankreihe über einen in den Schränken vorhandenen gemeinsamen horizontalen Kanal (5) und über in den betreffenden Schränken vorhandene vertikale Kanäle (6a-6d) zugeführt wird, wobei die Kanäle (5, 6a-6d) gleichzeitig Schutzkanäle für die Sammelschienen (3, 4a-4d) darstellen, die Strom zu und in den Schränken verteilen.

3. Verfahren zur Verteilung von Kühlgas in Schaltschränken nach Anspruch 1, **dadurch gekennzeichnet**, daß das Gas, welches der Schrankreihe zugeführt wird, mindestens gemäß einer der folgenden Behandlungsweisen behandelt wird: Kühlung, mechanische Filterung, chemische Filterung, andere chemische Behandlung, Befeuchtung und Trocknung in der Luftklimatisierungseinheit (2).

4. Verfahren zur Verteilung von Kühlgas in Schaltschränken nach Anspruch 3, **dadurch gekennzeichnet**, daß das Gas in dem Schranksystem einen höheren Druck als die die Schränke umgebende Luft hat, da die Luftklimatisierungseinheit mit zusätzlicher Umgebungsluft oder einem anderen Gas über eine verstellbare Eintrittsöffnung (9) versorgt wird zum Ausgleich eines aus der Schrankreihe herausleckenden Gasstromes und zur Verhinderung des Eindringens von Umgebungsluft in das Schranksystem.

5. Anordnung zur Durchführung des Verfahrens gemäß Anspruch 1 zur Verteilung von Kühlluft in einem System aus Schaltschränken, welche Anordnung Schaltschränke umfaßt, die dicht beieinander in mindestens einer Reihe mit mindestens zwei Schränken angeordnet sind, wobei die in den Schränken des Systems vorhandenen elektrischen Ausrüstungen durch Kühlgas von einer gemeinsamen Luftklimatisierungseinheit (2) gekühlt wird, **dadurch gekennzeichnet**,
daß die Schrankreihe (1a-1d) sich horizontal erstreckt und einen horizontalen Kanal (5) enthält, der sich durch alle Schränke erstreckt, sowie vertikale Kanäle (6a-6d) in den betreffenden Schränken enthält, welche vertikalen Kanäle von dem genannten horizontalen Kanal (5) abzweigen,
daß die genannten horizontalen und vertikalen Kanäle (5, 6a-6d) horizontale und vertikale Sammelschienen (3, 4a-4d) umgeben, die Strom zu den Schränken verteilen,
und daß die horizontalen und vertikalen Kanäle (5, 6a-6d) so beschaffen sind, daß sie Kühlgas von der genannten mindestens einen Luftklimatisierungseinheit (2) zu empfangen vermögen und Kühlgas zu den genannten elektrischen Ausrüstungen in den Schränken über Löcher oder Austrittsöffnungen zu verteilen vermögen.

6. Anordnung nach Anspruch 5, **dadurch gekennzeichnet**, daß die Schaltschränke der Reihe gegenüber der umgebenden Atmosphäre durch Dichtungen an den Spalten der Gerätegehäuse, welche der Umgebung zugewandt sind, isoliert sind.

7. Anordnung nach Anspruch 5, in welcher die Schaltschränke mit Verschlüssen für die horizontalen Kanäle (5) und für Schleusen (8a-8d), die von Öffnungen in den Schränkwänden gebildet werden, versehen sind, **dadurch gekennzeichnet**, daß bei der Entfernung der genannten Verschlüsse bei der Anordnung der Schränke in einer Schrankreihe ein Verteilerkanal beziehungsweise ein Sammelkanal für Kühlgas gebildet wird, wobei die Kanäle für die Gruppe von Schränken gemeinsam sind infolge des Zusammenwirkens der in den betreffenden Schränken vorhanden horizontalen Kanälen (5) beziehungsweise Schleusen (8a-8d).

8. Anordnung nach Anspruch 5, **dadurch gekennzeichnet**, daß jeder vertikale Kanal (6a-6d) mit Ventilen (11a-11d) versehen ist, durch die der Gasstrom zu dem betreffenden Schrank reguliert und individuell verteilt werden kann.

## Revendications

1. Procédé pour distribuer un gaz de refroidissement dans un système d'armoires de commutation (1a-1d) comprenant des armoires de commutation disposées au voisinage immédiat les unes des autres, dans au moins une série d'au moins deux armoires, et des appareillages électriques placés dans les armoires du système refroidi par un gaz de refroidissement provenant d'une unité de conditionnement d'air commune (2), caractérisé en ce que le gaz de refroidissement circulant dans la série d'armoires et dans chaque armoire est distribué dans, et le long des mêmes canaux (5, 6) que ceux suivant lesquels du courant est distribué dans la série d'armoires et dans chaque armoire respective (1a-1d).

2. Procédé de distribution d'un gaz de refroidissement dans des armoires de commutation selon la revendication 1, caractérisé en ce que les séries d'armoires, au nombre d'au moins un, s'étendent horizontalement et en ce que le gaz de refroidissement est distribué dans les armoires (1a-1d) de la série d'armoires par l'intermédiaize d'un canal horizontal commun (5) situé à l'intérieur des armoires et par l'intermédiaire de canaux verticaux (6a-6d) disposés dans les armoires respectives, les canaux (5, 6a-6d) constituant en même temps des canaux de protection pour des branches de barres omnibus (3, 4a-4d) qui distribuent du courant aux armoires et à l'intérieur de ces dernières.

3. Procédé de distribution d'un gaz de refroidissement selon la revendication 2, caractérisé en ce que le gaz qui est fourni à la série d'armoires est soumis à au moins l'une des formes de traitement suivantes: un refroidissement, un filtrage mécanique, un filtrage chimique, un autre traitement chimique, une hydratation et un séchage, dans l'unité de conditionnement d'air (2).

4. Procédé de distribution d'un gaz de refroidissement selon la revendication 3, caractérisé en ce que le gaz circulant dans le système d'armoires, a une pression plus élevée que l'air entourant les armoires, en raison du fait que l'unité de conditionnement d'air est alimentée d'une quantité supplémentaire d'air ambiant ou d'un autre gaz par l'intermédiaire d'un orifice d'entrée réglable (9), pour remplacer les pertes d'air fuyant de la série d'armoires et pour empêcher l'air ambiant de pénétrer dans le système d'armoires.

5. Structure permettant de mettre en oeuvre le procédé selon la revendication 1, pour distribuer de l'air de refroidissement dans un système d'armoires de commutation, cette structure comprenant des armoires de commutation agencées à proximité immédiate les unes des autres dans au moins une série d'au moins deux armoires et des appareillages électriques disposés dans les armoires du système, refroidis par un gaz de refroidissement provenant d'une unité de conditionnement d'air commune (2), caractérisée en ce que
la série d'armoires (1a-1d) s'étend horizontalement et comprend un canal horizontal (5) s'étendant à travers toutes les armoires et des canaux verticaux (6a-6d) dans les armoires respectives, les canaux verticaux se ramifiant à partir du canal horizontal (5),
les canaux horizontaux et verticaux (5, 6a-6d) entourent des branches de barres omnibus horizontales et verticales (3, 4a-4d) qui distribuent du courant aux armoires, et
les canaux horizontaux et verticaux (5, 6a-6d) sont conçus pour recevoir un gaz de refroidissement d'au moins une unité de conditionnement d'air (2) et pour distribuer le gaz de refroidissement aux appareillages électriques se trouvant dans les armoires par l'intermédiaire d'ouvertures ou d'orifices de sortie.

6. Structure selon la revendication 5, caractérisée en ce que les armoires de commutation de la série d'armoires sont isolées vis-à-vis de l'atmosphère ambiante au moyen de joints d'étanchéité placés en des interstices formés dans les boîtiers d'appareillages qui sont exposés à l'environnement.

7. Structure selon la revendication 5, dans laquelle les armoires de commutation sont munies d'enceintes pour les canaux horizontaux (5) et pour des passages (8a-8d) constitués par des ouvertures pratiquées dans le boîtier d'armoire, caractérisée en ce que lorsqu'on retire ces enceintes pour agrandir les armoires en des séries d'armoires, on crée respectivement un canal de distribution et un canal de réception, pour un gaz de refroidissement, les canaux étant communs à la série d'armoiries, du fait d'une coopération entre des canaux horizontaux (5) situés dans les armoires respectives (5) et à l'emplacement des passages (8a-8d).

8. Dispositif selon la revendication 5, caractérisé en ce que chaque canal vertical (6a-6d) est muni de vannes (11a-11d) au moyen desquelles le débit de gaz fourni à l'armoire correspondante peut être régulé et peut être distribué individuellement.
